# EUROPÄISCHE PATENTSCHRIFT

(11) **EP 2 416 567 B1**
(45) Veröffentlichungstag und Bekanntmachung des Hinweises auf die Patenterteilung: **20.03.2019**
(21) Anmeldenummer: 11006202.3
(22) Anmeldetag: 28.07.2011
(51) Int. Cl.: H04N 5/50, H04N 7/10, H04N 21/438

(54) **Verstärkungssystem**
Amplification system
Système d'amplification

(30) Priorität: 05.08.2010 ES 201001059
(43) Veröffentlichungstag der Anmeldung: 08.02.2012
(73) Patentinhaber: Televés, S.A., 15706 Santiago de Compostela (ES)
(72) Erfinder: Blanco Queiro, Manuel Elisardo, 15706 Santiago de Compostela (ES)

(56) Entgegenhaltungen:
- EP-A2- 1 838 096
- ES-A1- 2 299 312
- US-A1- 2006 277 578
- US-B1- 7 480 485

## Beschreibung

Die vorliegende Erfindung betrifft ein Verstärkungssystem für Fernsehsignale nach dem Oberbegriff des Anspruchs 1.

Es sind derzeit verschiedene Fernsehsignal-Verstärkungssysteme für SMATV/- CATV im Markt vorhanden. Diese Systeme entsprechen im wesentlich zwei Kriterien: Breitband-Verstärkungssysteme und Einkanal-Verstärkungssysteme.

Im erstgenannten Fall verstärkt ein einziger (VHF- oder UHF-) Bandverstärker( alle Kanäle des entsprechendes Bandes, die am Eingang des Verstärkers anliegen (jeder Kanal belegt 7 MHz in VHF und 8 MHz in UHF).

Im zweitgenannten Fall verfügt das Verstärkungssystem über so viele Verstärkungsmodule, wie Kanäle vorliegen, die zu verstärken sind, wobei jedes Verstärkungsmodul den entsprechenden Kanal verstärkt, der demjenigen entspricht, der zuvor abgestimmt worden ist.

Das Kanalkonzept (7 MHz in VHF und 8 MHz in UHF) im analogen Fernsehen entspricht einem einzelnen Fernsehprogramm, wobei oft das Wort Kanal anstelle des Wortes Programm und umgekehrt verwendet wird. Im digitalen Fernsehen wird von Multiplexkanal (Kanal oder Multiplex) gesprochen, wobei dieser einer Bandbreite entspricht, die gleich der Bandbreite eines Analogkanals ist. Aber im Unterschied zum Analogfall ist der Inhalt eines jeden (Multiplex)Kanals im Digitalfall größer als ein Fernsehkanal (typischerweise 4 Fernsehprogramme) und in der Folge haben das Konzept Kanal und das Konzept Programm im Fall des Digitalfernsehens nicht die gleiche Bedeutung.

Die Verstärkungssysteme weisen eine doppelte Problematik auf:
Verstärkungssysteme vom Typ Breibandverstärker haben das Problem, dass der Ausgangspegel am Ausgang des Verstärkers absinkt, wenn die Anzahl der Kanäle am Eingang ansteigt. Dies ist der Grund, dass diese Verstärkungssysteme in der gegenwärtigen Zeit, in der die Anzahl der Fernsehkanäle anwächst, ausschließlich auf kleine SMATV-Netze beschränkt sind.

Die Einkanal-Verstärkungssysteme sind in der Lage, größere Ausgangssignalpegel bereitzustellen und vor allem sind diese Ausgangspegel unabhängig von den Kanälen, die das System verstärkt Jedoch haben sie das Problem nicht frequenzagil zu sein, das heißt dass man den Kanal nicht in einfacher Weise an dem Ort seiner Installation abstimmen kann, sondern dass man das Verstärkungssystem zu der Fabrik zu schicken hat, um es abzustimmen.

Aus US 7,480,485 B1 ist ein Radiofrequenz-Repeatersystem eines Mobiltelefon-Systems bekannt, wobei das Radiofrequenz-Repeatersystem eine automatisierte Block/Kanal-Auswahl durchführt. Das Radiofrequenz-Repeatersystem weist ein Empfangsfilter auf, das Signale mit Frequenzen ausfiltert, die nicht in einem vorgegebenen Satz von Frequenzbandbreiten liegen.

Aus EP 1 838 096 A2 ist ein Fernsehsignal-Empfangsgerät mit einer Mehrzahl von Tunern und einem "TV application program" bekannt. Das "TV application programm"enthält ein "Auto scan module", das ein Kanal-Scan-Verfahren durchführt.

Das spanische Patent ES2299312 des Anmelders der vorliegenden Anmeldung beschreibt eine Verstärkungszentrale für Telekommunikationssignale (Breitband-Verstärkungssystem), welche eine Mehrzahl aktiver Filter umfasst, eine Steuereinheit, einen Speicher und einen Mikroprozessor. Dieses System umfasst Eingänge für Fernsehsignale in den Bändern UHF und VHF und eine Benutzerschnittstelle für die Programmierung der Systemparameter, unter anderem der Abstimmfrequenz der Mehrzahl aktiver Filter.

Diese Verstärkungszentrale schließt einen Satz aktiver kanalagiler Filter ein, wobei jeder der Kanalfilter eine automatische Gewinnsteuerung einschließt. Außerdem ermöglicht diese Verstärkungszentrale ihre Verbindung mit einer oder mit mehreren anderen Verstärkerzentralen in der Weise, das sie Breitbandverstärkersysteme darstellen, die die Vergrößerung der Anzahl der verstärkten Kanäle ermöglichen, ohne dass das Ausgangssignal dieser Signale verringert wird.

Die Abstimmung der Frequenz der verschieden aktiven Filter der Verstärkungszentrale bzw. der Verstärkungszentralen, die das Breitband-Verstärkungssystem umfassen, ist ein langwieriger Wiederholungsprozess, der immer dann zu wiederholen ist, wenn die Verstärkungszentrale bzw. die Verstärkungszentralen aktiviert werden.

Ausgehend von diesem Stand der Technik liegt der Erfindung die Aufgabe zugrunde, ein Verstärkungssystem der eingangs genannten Art zu schaffen, das einen Selbstabstimmungsprozess hinsichtlich der aktiven Filter und entsprechenden verfügbaren (Multiplex)Fernsehkanäle durchführt, und das innerhalb eines jeden (Multiplex)Kanals das gewünschte Fernsehprogramm auswählt.

Diese Aufgabe wird mittels eines Verstärkungssystems gemäß Anspruch 1 gelöst.

Die Erfindung zeichnet sich durch eine Vielzahl von Vorteilen aus.

Ein vorteilhaftes Ausführungsbeispiel gemäß der Erfindung weist in einem Verstärkungssystem für Fernsehsignale eine Mehrzahl einstellbarer Filter einer vorgebbaren Bandbreite und wenigstens einen Verstärker auf, wobei in einem Eingangssignal Fernsehkanäle vorliegen. Weiterhin weist das Verstärkungssystem eine Anordnung aus einer Abstimm-Einheit und einer Kanal-Demodulationseinheit auf. Die Abstimm-Einheit ist in der Weise ausgestaltet, dass sie in einem Selbstabstimmungsprozess jedem einstellbaren Filter einen in dem Eingangssignal vorliegenden Fernsehkanal zuordnet. Die Kanal-Demodulationseinheit ist in der Weise ausgestaltet, dass sie Fernsehkanäle auf die Frequenzen demoduliert, auf die die einstellbaren Filter zuvor eingestellt worden sind. Die Anordnung aus der Abstimm-Einheit und der Kanal-Demodulationseinheit ist in der Weise ausgestaltet, dass eine kanalidentifizierende Information aus den demodulierten Kanälen extrahiert und in dem Selbstabstimmungsprozess diese Information für das Abstimmen der einstellbaren Filter auf Frequenzen aus einer Gesamtheit vorgegebener Frequenzen innerhalb eines Frequenzbandes verwendet wird. Das Verstärkungssystem weist auch einen Signalmischer auf, der Ausgangssignale der einstellbaren Filter mischt und dem ausgangsseitig ein Breitbandverstärker nachgeschaltet ist.

Damit wird der Vorteil erzielt, dass eine aufwendige und sich wiederholende Aufgabe, Filter abzustimmen, vermieden wird.

In einem weiteren vorteilhaften Beispiel weist der Selbstabstimmungsprozess folgende Schritte auf:
a) Abstimmen eines ersten Filters auf eine erste Frequenz aus der Gesamtheit vorgegebener Frequenzen innerhalb des Frequenzbandes,
b) Messen des Signalpegels in der ersten Frequenz,
c) Vergleichen des gemessenen Pegels mit einem Referenzpegel;
d) Speichern des Abstimmpegels der ersten Frequenz in einem Speicher (2), sofern der gemessene Pegel des Signals gleich oder größer ist als ein Bezugspegel, oder
   Wiederholen des Abstimmens des ersten Filters auf eine zweite Frequenz, wenn der gemessene Signalpegel nicht gleich oder nicht größer ist als der Bezugspegel,
e) Wiederholen der Schritte a), b), c) und d) hinsichtlich anderer Frequenzen, insbesondere bis die Gesamtheit der vorgegebenen Frequenzen bearbeitet ist;
f) Anwenden der im Speicher abgespeicherten Abstimmwerte entsprechend jeder Frequenz für die Einstellung eines jeden der einstellbaren Filter.

In einem weiteren vorteilhaften Verstärkungssystem gemäß der Erfindung weist der Selbstabstimmungsprozess folgende Schritte auf:
a) Abstimmen eines ersten Filters auf eine erste Frequenz aus der Gesamtheit vorgegebener Frequenzen innerhalb des Frequenzbandes;
b) Demodulieren des Kanals entsprechend der abgestimmten Frequenz,
c) Auswählen eines gewünschten demodulierten Fernsehkanals entsprechend der abgestimmten Frequenz,
d) Speichern des Abstimmwertes der ersten Frequenz in einem Speicher (2), sofern der demodulierte Fernsehkanal entsprechend
   der vorgegebenen Frequenz ausgewählt ist, oder Wiederholen des Abstimmens auf eine zweite Frequenz, wenn der demodulierte Fernsehkanal entsprechend dieser Frequenz nicht ausgewählt ist,
e) Wiederholen der Schritte a), b), c) und d) hinsichtlich anderer Frequenzen, insbesondere bis die Gesamtheit der vorgegebenen Frequenzen bearbeitet ist;
f) Anwenden der im Speicher abgespeicherten Abstimmwerte entsprechend jeder Frequenz für die Einstelllung eines jeden der einstellbaren Filter.

Zum weiteren Verständnis der Erfindung wird nun beispielhaft das erfindungsgemäße Verstärkungssystem anhand der Zeichnung beschrieben.

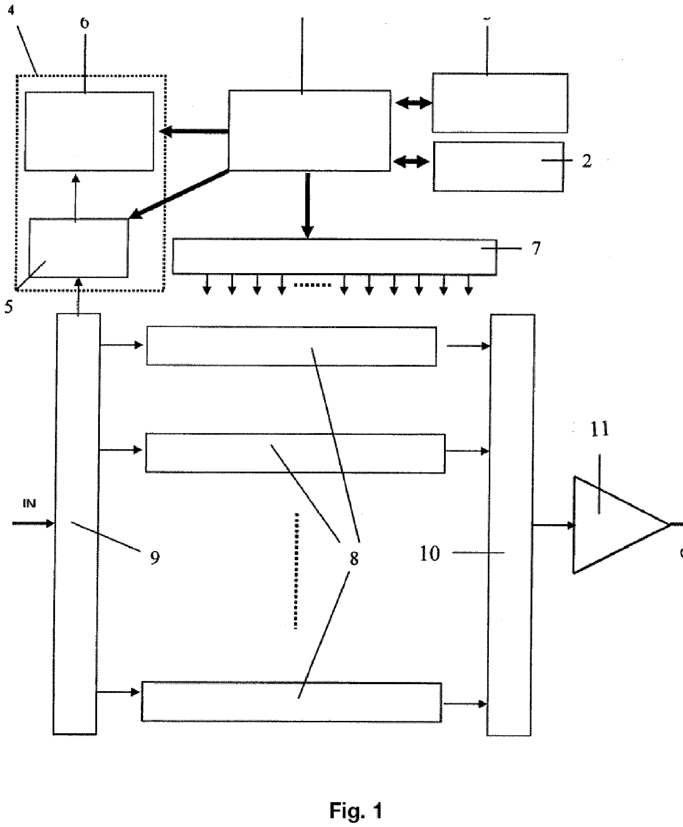

Figur 1 zeigt ein Schema des Verstärkungssystems für Fernsehsignale gemäß der Erfindung. In Form eines Blockschaltbildes. Dieses weist einen Mikroprozessor 1, einen Speicher 2, eine Kommunikationseinheit 3, ein Element 4 der Kanalzuordnung und der Kanalidentifikation, eine Abstimmeinheit 5, eine Kanal-Demodulationseinheit 6, wenigstens einen Digital-/Analag-Wandler D/A 7, aktive Filter/programmierbare Verstärker 8, einen Signalverteiler 9, einen Signalmischer 10 und einen Breitbandverstärker 11 auf.

Der Mikroprozessor 1 führt Programmierungsaufträge aus, wobei in den D/A-Wandlern 7 die digitalen Werte der Abstimmspannung und der Bandbreite der aktiven Filter/ programmierbaren Verstärker 8 umgewandelt werden, wobei diese Werte, die von den D/A-Wandlern 7 in analoge Signale umgesetzt worden sind, verstärkt werden und auf die aktiven Filter/programmierbaren Verstärker 8 angewendet werden. Ebenso führt der Mikroprozessor 1 Programmierungaufträge aus, die für die Steuerung des Elementes 4 der Kanalzuordnung und der Kanalidentifikation benötigt werden.

Der Speicher 2 ist beispielsweise ein EEPROM-Speicher, der die digitalisierten Abstimm-Spannungswerte speichert sowie die Werte der Bandbreite der aktiven Filter/programmierbaren Verstärker 8. Der Speicher hat auch die Aufgabe, die Werte zu speichern, mit denen das Verstärkungssystem gemäß der Erfindung programmiert wird (Frequenz, Signalpegel, usw.).

Die Kommunikationseinheit 3 führt die Kommunikation mit der Schnittstelle des Benutzers für die Programmierung der Systemparameter (Frequenz, Signalpegel, usw.) durch. Diese Kommunikationseinheit ermöglicht es, dass externe Programmierungsmedien (zum Beispiel PC, PDA, usw.) für die Konfiguration der Einheit und für die Prüfung bzw. Bestätigung des Betriebszustandes der Einheit 3 verwendet werden können

Das Element 4 der Kanalzuordnung und Kanalidentifikation hat die Aufgabe, den Kanal abzustimmen und später zu demodulieren, um zu ermöglichen, die am Eingang empfangenen Kanäle als Treffer zu identifizieren und die aktiven Filter/Verstärker 8 mit dem (Multiplex)Kanal des betreffenden Digitalfernsehens eines Folgeprozessors zu programmieren. Das Element 4 besteht aus einer Abstimm-Einheit 5 und aus einer Kanal-Demodulierungseinheit 6.

Die Digital-/Analogwandler D/A 7 haben die Aufgabe, die digitalen Werte derr Abstimmspannung und der Bandbreite der aktiven Filter/programmierbaren Verstärker 8 in analoge Spannungen/Signale zu wandeln.

Die aktiven Filter/Verstärker 8 bestehen aus einem einstellbaren Eingangs-Filter, einem aktiven Element, einem einstellbaren Ausgangsfilter, einer automatischen Gain-Control-Schaltung (CAG) und aus einem Signal-Detektor, der Signale oberhalb des Bezugspegels erkennt.

Jedes einzelne Filter weist wenigstens einen Resonanzkreis, auf, bestehend aus einer Induktivität und einer dazu parallelen Kapazität (Varicap). Diese Kapazität wird verändert durch Modifizieren der Spannung, die an die Varicap-Diode im Resonanzkreis angelegt wird, womit das Filter auf die gewünschte Frequenz eingestellt wird. Um die Bandbreite dieser Filter zu ändern, verwendet man eine Kapazität, die durch eine Varicap-Diode bzw. mehrere Varicap-Dioden gebildet wird. Die so erhaltene Kopplung ermöglicht es, den Bereich von einer Kanalbandbreite bis zu einer Arbeits-Bandbreite des UHF- oder VHF-Filters abzudecken.

Die Spannungen, die an diese Dioden angelegt werden, werden von der Steuereinheit im Programmierungsprozess gebildet.

Der Signalverteiler 9 hat die Aufgabe, die verschiedenen TV-Kanäle auf die Filter zu verteilen, die innerhalb der Mehrzahl der Kanäle ausgewählt werden, die abgefragt werden, um sie in einer Installation zu verstärken und zu verteilen.

Der Signalmischer 10 hat die Aufgabe, die Signale zu mischen, die die Filter durchlaufen, und sie an einem einzigen Ausgang zu führen, um sie später zu verstärken.

Der Breitbandverstärker 11 hat die Aufgabe, den Pegel der Fernseh-Signale / Kanäle anzuheben, die vorher gefiltert wurden für die entsprechende Verteilung auf verschiedenen Steckdosen des Benutzers.

Das Verstärkungssystem führt den folgenden Selbstabstimmungsprozess bzw. das folgende Verfahren zur Steuerung des vorstehend beschriebenen Verstärkungssystems durch:
a) Abstimmen eines ersten Filters auf eine erste Frequenz aus der Gesamtheit vorgegebener Frequenzen innerhalb des Frequenzbandes,
b) Messen des Signalpegels in der ersten Frequenz,
c) Vergleichen des gemessenen Pegels mit einem Referenzpegel,
d) Speichern des Abstimmpegels der ersten Frequenz in einem Speicher (2), sofern der gemessene Pegel des Signals gleich oder größer ist als ein Bezugspegel; oder
   Wiederholen des Abstimmens des ersten Filters auf eine zweite Frequenz, wenn der gemessene Pegel des Signals nicht gleich oder nicht größer ist als der Bezugspegel,
e) Wiederholen der Schritte a), b), c) und d) hinsichtlich anderer Frequenzen, insbesondere bis die Gesamtheit der vorgegebenen Frequenzen bearbeitet ist;
f) Anwenden der im Speicher abgespeicherten Abstimmwerte entsprechend jeder Frequenz für die Einstelllung der einstellbaren Filter.

Weiterhin betrifft die Erfindung auch den folgenden Selbstabstimmungsprozess:
a) Abstimmen eines ersten Filters auf eine erste Frequenz aus der Gesamtheit vorgegebener Frequenzen innerhalb des Frequenzbandes,
b) Demodulieren des Kanals entsprechend der Abstimmfrequenz,
c) Auswählen eines gewünschten demodulierten Fernsehkanals entsprechend der Abstimmfrequenz,
d) Speichern des Abstimmwertes der ersten Frequenz in einem Speicher (2), sofern der demodulierte Fernsehkanal entsprechend der vorgegebenen Frequenz ausgewählt ist, oder
   Wiederholen des Abstimmens des ersten Filters auf eine zweite Frequenz, wenn der demodulierte Fernsehkanal entsprechend der Frequenz nicht ausgewählt ist,
e) Wiederholen der Schritte a), b), c) und d) hinsichtlich anderer Frequenzen, insbesondere bis die Gesamtheit der vorgegebenen Frequenzen bearbeitet ist;
f) Anwenden der im Speicher abgespeicherten Abstimmwerte entsprechend jeder Frequenz für die Einstelllung der einstellbaren Filter.

### Bezugszeichen

- 1: Mikroprozessor
- 2: Speicher
- 3: Kommunikationseinheit
- 4: Einheit zur Kanalzuordnung und Kanalidentifikation
- 5: Erstes Element: Einheit zur Kanalidentifikation, Abstimm-Einheit
- 6: Kanaldemodulationseinheit
- 7: Digital-Analog-Wandler D/A
- 8: Aktive Filter/Programmierbare Verstärker
- 9: Signalverteiler
- 10: Signalmischer
- 11: Breitbandverstärker

## Patentansprüche

1. Verstärkungssystem für Fernsehsignale, wobei in einem Eingangssignal Fernsehkanäle vorliegen,
- wobei das Verstärkungssystem eine Mehrzahl einstellbarer Filter (8) einer vorgebbaren Bandbreite aufweist, und wobei das Verstärkungssystem wenigstens einen Verstärker (11) aufweist,
- wobei das Verstärkungssystem eine Einheit (4) der Kanalzuordnung und Kanalidentifikation aufweist,
- wobei die Einheit (4) der Kanalzuordnung und Kanalidentifikation aus einer Abstimm-Einheit (5) und aus einer Kanal-Demodulationseinheit (6) besteht,
- wobei das Verstärkungssystem ein erstes Filter und einen Speicher (2) aufweist,
- wobei das Verstärkungssystem einen Signalverteiler (9) aufweist, der konfiguriert ist, um das Eingangssignal mit den Fernsehkanälen auf die einstellbaren Filter (8) zu verteilen,
- wobei das Verstärkungssystem einen Signalmischer (10) aufweist, der so konfiguriert ist, dass er die Ausgangssignale der einstellbaren Filter (8) mischt und die gemischten Signale an seinen einzigen Ausgang führt, und
wobei das Verstärkungssystem zur Durchführung eines Selbstabstimmungsprozesses konfiguriert ist, wobei der Selbstabstimmungsprozess die folgenden Schritte aufweist:
a) Abstimmen des ersten Filters durch die Abstimm-Einheit auf eine Frequenz aus der Gesamtheit vorgegebener Frequenzen innerhalb eines Frequenzbandes,
b) Demodulieren eines Fernsehkanals durch die Kanal-Demodulationseinheit (6) aus dem Eingangssignal entsprechend der abgestimmten Frequenz des ersten Filters und Extrahieren von kanalidentifizierender Information aus dem demodulierten Fernsehkanal,
c) Entscheiden, basierend auf der extrahierten kanalidentifizierenden Information, ob der demodulierte Fernsehkanal gültig ist,
d) wenn der demodulierte Fernsehkanal gültig ist, speichern des Abstimmwertes der Frequenz in dem Speicher (2);
e) Wiederholen der Schritte a), b), c) und d) bezüglich anderer Frequenzen aus der Gesamtheit vorgegebener Frequenzen,
f) Einstellen der einstellbaren Filter (8) mit den in Schritt d) im Speicher (2) gespeicherten Abstimmwerten.

2. Verstärkungssystem nach Anspruch 1, wobei die Kanaldemodulationseinheit (6) ferner dazu konfiguriert ist, die Fernsehkanäle entsprechend den Abstimmwerten der Frequenzen zu demodulieren, auf die die einstellbaren Filter (8) eingestellt worden sind.

3. Methode für ein Verstärkungssystem für Fernsehsignale, wobei in einem Eingangssignal Fernsehkanäle vorliegen,
- wobei das Verstärkungssystem eine Mehrzahl einstellbarer Filter (8) einer vorgebbaren Bandbreite aufweist, und wobei das Verstärkungssystem wenigstens einen Verstärker (11) aufweist,
- wobei das Verstärkungssystem eine Einheit (4) der Kanalzuordnung und Kanalidentifikation aufweist,
- wobei die Einheit (4) der Kanalzuordnung und Kanalidentifikation aus einer Abstimm-Einheit (5) und aus einer Kanal-Demodulationseinheit (6) besteht,
- wobei das Verstärkungssystem ein erstes Filter und einen Speicher (2) aufweist,
- wobei das Verstärkungssystem einen Signalverteiler (9) aufweist, der das Eingangssignal mit den Fernsehkanälen auf die einstellbaren Filter (8) verteilt,
- dass das Verstärkungssystem einen Signalmischer (10) aufweist, der Ausgangssignale der einstellbaren Filter (8) mischt und die Signale an seinen einzigen Ausgang führt, und
wobei das Verstärkungssystem einen Selbstabstimmungsprozess durchführt, wobei der Selbstabstimmungsprozess die folgenden Schritte aufweist:
a) Abstimmen des ersten Filters durch die Abstimm-Einheit (5) auf eine Frequenz aus der Gesamtheit vorgegebener Frequenzen innerhalb eines Frequenzbandes,
b) Demodulieren eines Fernsehkanals durch die Kanal-Demodulationseinheit (6) aus dem Eingangssignal entsprechend der abgestimmten Frequenz des ersten Filters und Extrahieren von kanalidentifizierender Information aus dem demodulierten Fernsehkanal,
c) Entscheiden, basierend auf der extrahierten kanalidentifizierenden Information, ob der demodulierte Fernsehkanal gültig ist,
d) wenn der demodulierte Fernsehkanal gültig ist, speichern des Abstimmwertes der Frequenz in dem Speicher (2);
e) Wiederholen der Schritte a), b), c) und d) bezüglich anderer Frequenzen aus der Gesamtheit vorgegebener Frequenzen,
e) Einstellen der einstellbaren Filter (8) mit den in Schritt d) im Speicher (2) gespeicherten Abstimmwerten.

4. Methode nach Anspruch 3, wobei die Kanaldemodulationseinheit (6) ferner die Fernsehkanäle entsprechend den Abstimmwerten der Frequenzen demoduliert, auf die die einstellbaren Filter (8) eingestellt worden sind.

## Claims

1. An amplification system for television signals, wherein television channels are present in an input signal,
- wherein the amplification system includes a plurality of adjustable filters (8) of a predeterminable bandwidth, and wherein the amplification system includes at least one amplifier (11),
- wherein the amplification system includes a unit (4) of channel allocation and channel identification,
- wherein the unit (4) of channel allocation and channel identification consists of a tuning unit (5) and a channel demodulation unit (6),
- wherein the amplification system includes a first filter and a memory (2),
- wherein the amplification system includes a signal distributor (9) configured to distribute the input signal with the television channels to the adjustable filters (8),
- wherein the amplification system includes a signal mixer (10), configured to mix the output signals of the adjustable filters (8) and feed the mixed signals to its single output, and
- wherein the amplification system is configured to perform a self-tuning process, the self-tuning process comprising the following steps:
a) Tuning the first filter by the tuning unit to one frequency from the totality of predeterminable frequencies within a frequency band,
b) Demodulating a television channel by the channel demodulation unit (6) from the input signal according to the tuned frequency of the first filter and extracting channel identifying information from the demodulated television channel,
c) Deciding, based on the extracted channel identifying information, whether the demodulated television channel is valid,
d) If the demodulated television channel is valid, storing the tuning value of the frequency in the memory (2);
e) Repeating steps a), b), c) and d) with respect to other frequencies from the totality of predetermined frequencies,
f) Setting the adjustable filters (8) according to the tuning values stored in the memory (2) in step d).

2. The amplification system according to claim 1, wherein the channel demodulation unit (6) is further configured to demodulate the television channels according to the tuning values of the frequencies to which the adjustable filters (8) have been set.

3. A method for an amplification system for television signals, wherein television channels are present in an input signal,
- wherein the amplification system includes a plurality of adjustable filters (8) of a predetermined bandwidth, and wherein the amplification system includes at least one amplifier (11),
- wherein the amplification system includes a unit (4) for channel allocation and channel identification,
- wherein the unit (4) of channel allocation and channel identification consists of a tuning unit (5) and a channel demodulation unit (6),
- wherein the amplification system includes a first filter and a memory (2),
- wherein the amplification system includes a signal distributor (9) that distributes the input signal with the television channels to the adjustable filters (8),
- that the amplification system has a signal mixer (10) which mixes output signals from the adjustable filters (8) and feeds the signals to its single output, and
- wherein the amplification system performs a self-tuning process, the self-tuning process comprising the following steps:
a) Tuning the first filter by the tuning unit (5) to one frequency from the totality of predetermined frequencies within a frequency band,
b) Demodulating a television channel by the channel demodulation unit (6) from the input signal according to the tuned frequency of the first filter and extracting channel identifying information from the demodulated television channel,
c) Deciding, based on the extracted channel identifying information, whether the demodulated television channel is valid,
d) If the demodulated television channel is valid, storing the tuning value of the frequency in the memory (2);
e) Repeating steps a), b), c) and d) with respect to other frequencies from the totality of predetermined frequencies,
f) Setting the adjustable filters (8) according to the tuning values stored in the memory (2) in step d).

4. The method according to claim 3, wherein the channel demodulation unit (6) further demodulates the television channels according to the tuning values of the frequencies, to which the adjustable filters (8) have been set.

## Revendications

1. Système d'amplification de signaux de télévision comprenant des canaux de télévision dans un signal d'entrée,
- ledit système d'amplification comprenant un ensemble de filtres réglables (8) d'une largeur de bande pré-réglable, et au moins un amplificateur (11),
- et une unité (4) d'attribution et d'identification de canal,
- dans lequel l'unité (4) d'attribution et d'identification de canal consiste en une unité de syntonisation (5) et une unité de démodulation de canal (6),
- ledit système d'amplification comprenant un premier filtre et une mémoire (2),
- ledit système d'amplification comprenant un répartiteur de signal (9) configuré pour distribuer le signal d'entrée avec les canaux de télévision vers les filtres réglables (8),
- ledit système d'amplification comprenant un mélangeur de signaux (10) configuré pour mélanger les signaux de sortie des filtres réglables (8) et envoyer les signaux mélangés à sa seule sortie, et
- ledit système d'amplification étant configuré pour effectuer un processus d'autoréglage, le processus d'auto-syntonisation comprenant les étapes suivantes :
a) la syntonisation du premier filtre par l'unité de syntonisation sur une fréquence à partir du total des fréquences prédéterminées dans une bande de fréquences,
b) la démodulation d'un canal de télévision par l'unité de démodulation de canal (6) basée sur le signal d'entrée selon la fréquence accordée du premier filtre et l'extraction des informations d'identification de canal du canal de télévision démodulé,
c) la décision, sur la base des informations d'identification du canal extrait, si le canal de télévision démodulé est valide,
d) si le canal de télévision démodulé est valide, enregistrer la valeur de syntonie de la fréquence dans la mémoire (2) ;
e) la répétition des étapes a), b), c) et d) pour les autres fréquences de l'ensemble des fréquences prédéterminées,
f) le réglage des filtres réglables (8) avec les valeurs de syntonie enregistrées dans la mémoire (2) à l'étape d).

2. Système d'amplification selon la revendication 1, dans lequel l'unité de démodulation de canal (6) est aussi configurée pour démoduler les canaux de télévision selon les valeurs de syntonie des fréquences sur lesquelles les filtres réglables (8) ont été paramétrés.

3. Méthode pour un système d'amplification de signaux de télévision, dans laquelle des canaux de télévision sont présents dans un signal d'entrée,
- ledit système d'amplification comprenant un ensemble de filtres réglables (8) d'une largeur de bande pré-réglable, et au moins un amplificateur (11),
- ledit système d'amplification comprenant une unité (4) d'attribution et d'identification de canal,
- dans lequel l'unité (4) d'attribution et d'identification de canal consiste en une unité de syntonisation (5) et une unité de démodulation de canal (6),
- ledit système d'amplification comprenant un premier filtre et une mémoire (2),
- ledit système d'amplification comprenant un distributeur de signal (9) qui distribue les signaux d'entrée avec les canaux de télévision aux filtres réglables (8),
- ledit système d'amplification comprenant un mélangeur de signaux (10) qui mélange les signaux de sortie des filtres réglables (8) et envoie les signaux à sa sortie unique, et
- ledit système d'amplification effectuant un processus d'auto-syntonisation comprenant les étapes suivantes :
a) la syntonisation du premier filtre par l'unité de syntonisation (5) sur une fréquence basée sur l'ensemble des fréquences prédéterminées dans une bande de fréquences,
b) la démodulation d'un canal de télévision par l'unité de démodulation de canal (6) basée sur le signal d'entrée selon la fréquence accordée du premier filtre et l'extraction des informations d'identification de canal du canal de télévision démodulé,
c) la décision, sur la base des informations d'identification du canal extrait, si le canal de télévision démodulé est valide,
d) si le canal de télévision démodulé est valide, l'enregistrement de la valeur de syntonie de la fréquence dans la mémoire (2) ;
e) la répétition des étapes a), b), c) et d) pour les autres fréquences de l'ensemble des fréquences prédéterminées,
f) le réglage des filtres réglables (8) avec les valeurs de syntonie enregistrées dans la mémoire (2) à l'étape d).

4. Méthode selon la revendication 3, dans laquelle l'unité de démodulation de canal (6) démodule aussi les canaux de télévision selon les valeurs de syntonie des fréquences sur lesquelles les filtres réglables (8) ont été paramétrés.
